**Europäisches Patentamt**

**European Patent Office**

**Office européen des brevets**

(19)

(11) Numéro de publication: **0 241 341**
**A1**

(12) # DEMANDE DE BREVET EUROPEEN

(21) Numéro de dépôt: **87400630.7**

(22) Date de dépôt: **20.03.87**

(51) Int. Cl.³: **A 01 G 5/04**
**A 01 G 9/10, A 01 G 31/00**

(30) Priorité: **21.03.86 FR 8604047**

(43) Date de publication de la demande:
**14.10.87 Bulletin 87/42**

(84) Etats contractants désignés:
**AT BE CH DE ES FR GB GR IT LI LU NL SE**

(71) Demandeur: **Eychenne, Camille**
**"Mon Désir"**
**F-11400 Saint-Martin Lalande(FR)**

(72) Inventeur: **Eychenne, Camille**
**"Mon Désir"**
**F-11400 Saint-Martin Lalande(FR)**

(74) Mandataire: **Chevallier, Robert Marie Georges**
**Cabinet BOETTCHER 23, rue La Boétie**
**F-75008 Paris(FR)**

(54) **Bac de semis, de culture de plantes et de compositions à base de fleurs coupées et de plantes coupées et procédé de réalisation d'un tel bac.**

(57) Ce bac comprend un bloc de mousse hydrophile (1) en matière plastique de densité comprise entre 0,15 et 0,35 que l'on a couvert sur une fraction de sa surface extérieure comprise entre 15 % et 95 % de cette dernière d'une couche continue de matière imperméable (2), de préférence de matière plastique d'une épaisseur de 0,5 à 3 mm environ.

Fig.1

EP 0 241 341 A1

Bac de semis, de culture de plantes et de compositions
à base de fleurs coupées et de plantes coupées et
procédé de réalisation d'un tel bac

L'invention a pour objet un bac utilisable pour la germination de graines, pour la culture de plantes, pour la réalisation de compositions florales diverses.

Le mot bac est utilisé ici pour désigner l'objet de l'invention indépendamment des dimensions et des formes qui peuvent lui être données et qui peuvent varier dans une large gamme. Vers la limite inférieure de cette gamme le bac peut devenir un pot, de taille plus ou moins grande comme les pots de fleurs, ou une couronne ou une croix pour composition florale; vers la limite supérieure de la gamme, le bac peut devenir une cuve pour la culture sans terre.

L'une des difficultés de la culture des plantes en bacs remplis de terre est celle de l'arrosage. On trouve dans le commerce des bacs à réserve d'eau conçus pour permettre un espacement des arrosages; néanmoins on constate que la terre passe par des alternances d'humidité excessive quand la réserve d'eau vient d'être garnie et de sécheresse relative quand le niveau de l'eau commence à baisser dans la réserve.

Dans la culture des plantes sans terre ou hydro-culture au moyen de solutions aqueuses de sels nutritifs, la difficulté principale est celle de l'enracinement des plantes auxquelles il faut procurer un milieu dans lequel leurs racines peuvent se fixer et à travers lequel les solu-tions aqueuses sont mises en circulation. Cette mise en circulation des solutions aqueuses est nécessaire parce que le milieu de fixation des racines ne retient généralement pas suffisamment ces solutions; cependant, cette circulation indispensable n'est pas non plus sans inconvénient parce qu'elle est la cause d'une évaporation de l'eau dont la conséquence est la variation constante de la concentration en sels nutritifs.

L'invention a pour but principal d'apporter un bac pour semis et pour culture de plantes qui comprend un milieu de fixation des racines et de conservation pendant une période prolongée atteignant plusieurs mois et même une année d'une solution de sels nutritifs substantiellement soustraite à l'évaporation directe, sans humidité initiale excessive préjudiciable aux plantes.

Selon un autre but de l'invention, celle-ci vise à apporter un bac du type ci-dessus utilisable en outre, quand le milieu est sec ou partiellement imbibé d'eau, pour la réalisation rapide de compositions à base de fleurs coupées ou de plantes coupées.

On connaît, par le document DE-A-1949473, un corps sensiblement cubique, composé d'un bloc en mousse de polyuréthane entouré sur quatre faces latérales d'une feuille en matière plastique qui est conformée en fourreau par une soudure longitudinale de deux bords extrêmes opposés. Un tel corps s'obtient à partir d'une barre en mousse sur les faces latérales de laquelle on plie la feuille que l'on soude ensuite à elle-même pour la fermer. Puis on découpe en tronçons cette barre revêtue. Les corps ainsi obtenus ont une face inférieure et une face supérieure qui restent découvertes. Un tel corps sert à la culture de plantes, essentiellement à l'aide de trous qui sont creusés à partir de la face supérieure pour contenir des compositions nutritives; le corps peut aussi être plongé partiellement dans de l'eau qu'il absorbe par sa face inférieure.

Un bac conforme à l'invention comprend un bloc de mousse hydrophile en matière plastique, à pores ouverts, d'une densité comprise entre 0,15 et 0,35 ayant une face inférieure et une surface extérieure dont une proportion incluant ladite face inférieure, comprise entre 15 % et 95 %, est couverte d'une couche continue de matière imperméable insensible à l'action de l'eau et du milieu environnant, cette couche étant compatible avec ladite mousse et adhérant étroitement à la surface de la mousse qu'elle couvre.

De préférence cette matière imperméable est une matière plastique ayant une épaisseur d'une fraction de millimètre à plusieurs millimètres.

Avantageusement la couche continue de matière plastique adhère étroitement à la mousse hydrophile par des infiltrations superficielles dans les pores de cette mousse. On parvient à un tel bac préféré par un procédé de réalisation couvert aussi par l'invention et selon lequel on dépose sur la partie de la surface extérieure du bloc de mousse que l'on veut couvrir de matière imperméable une préparation initialement fluide qui durcit in situ à une température inférieure à la température de fusion ou de décomposition de la mousse en matière plastique. Des préparations de ce genre sont connues dans le domaine des matières plastiques;elles comprennent généralement deux composants, dont l'un joue le rôle de catalyseur de polymérisation, que l'on réunit au moment de l'emploi. D'autres préparations reposent sur la réaction de deux corps comme un isocyanate et un polyalcool ou un polyester. Par exemple la Société allemande Bayer fournit deux composants qui sont constitués essentiellement l'un par un polyisocyanate connu sous la dénomination Desmophen, l'autre par un polyol connu sous la dénomination Desmodur. Bien entendu des adjuvants divers et en particulier une charge comme du sulfate de baryum peuvent être ajoutés à l'un au moins des deux composants.

Après avoir réuni intimement les deux composants, on fait couler ou on étale ou on projette le mélange sur la surface extérieure du bloc de mousse, selon de nombreux moyens pratiques connus en soi d'application de ce mélange.

Selon une variante du procédé de l'invention, quand la préparation est suffisamment peu visqueuse on plonge le bloc de mousse dans la préparation jusqu'au niveau désiré de recouvrement de sa face latérale, on le retire et on laisse durcir la couche de préparation entraînée avec la

mousse, de préférence dans une atmosphère chaude qui accélère le durcissement.

Certains autres produits, du genre des plastisols, sont utilisables aussi, par exemple, par trempage du
bloc de mousse hydrophile, à condition que leur température
de gélification ne dépasse pas celle que la mousse peut
supporter sans se détériorer.

On connaît aussi des produits qui durcissent
après mélange avec de l'eau; ils conviennent également dans
le cadre de l'invention à condition que leur viscosité leur
permette de bien adhérer à la mousse en s'infiltrant superficiellement dans les pores, et que, après durcissement, ils
donnent naissance à une couche imperméable et insensible à
l'humidité, avec une résistance mécanique suffisante, principalement aux chocs, sous une faible épaisseur.

La mousse utilisée est de préférence une mousse
hydrophile de polyuréthane ayant une densité de l'ordre de
0,15 à 0,28.

On se reportera maintenant au dessin annexé
pour donner une explication plus détaillée de l'invention
en décrivant des exemples de réalisation. Dans ce dessin :

- la figure 1 est une vue en perspective d'un
bac conforme à l'invention avec une plante ornementale,

- la figure 2 est une vue en coupe selon II-II
de la figure 1 montrant les racines de la plante dans le
bloc de mousse,

- la figure 3 est une vue en perspective d'un
demi-bloc de mousse,

- la figure 4 est une vue très agrandie de
détail montrant la liaison étroite de la couche extérieure
en matière plastique avec le bloc de mousse,

- les figures 5 et 6 sont des vues en coupe
analogue à la figure 2 montrant deux variantes de réalisation
d'un bac de culture selon l'invention,

- les figures 7 à 8 sont des vues en élévation
de bacs conformes à l'invention destinés à la confection de

compositions à partir de fleurs coupées et/ou de plantes cou-pées,

- la figure 10 est une vue de détail en coupe selon X-X de la figure 9,

- la figure 11 est une vue de détail analogue à la figure 10 et montrant une variante de réalisation.

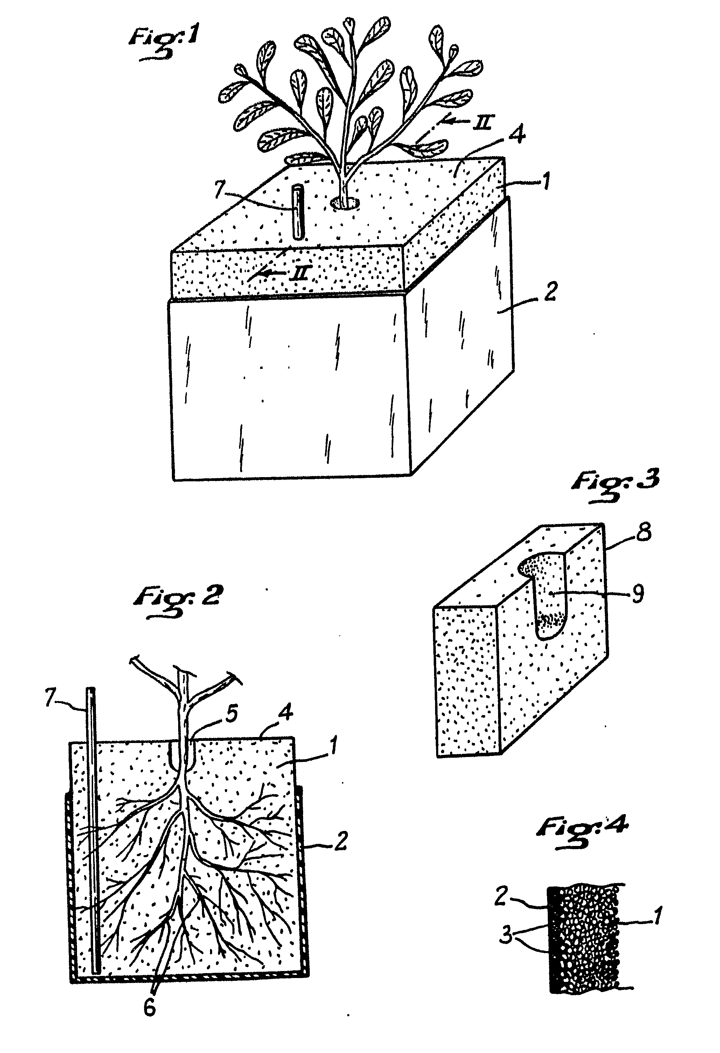

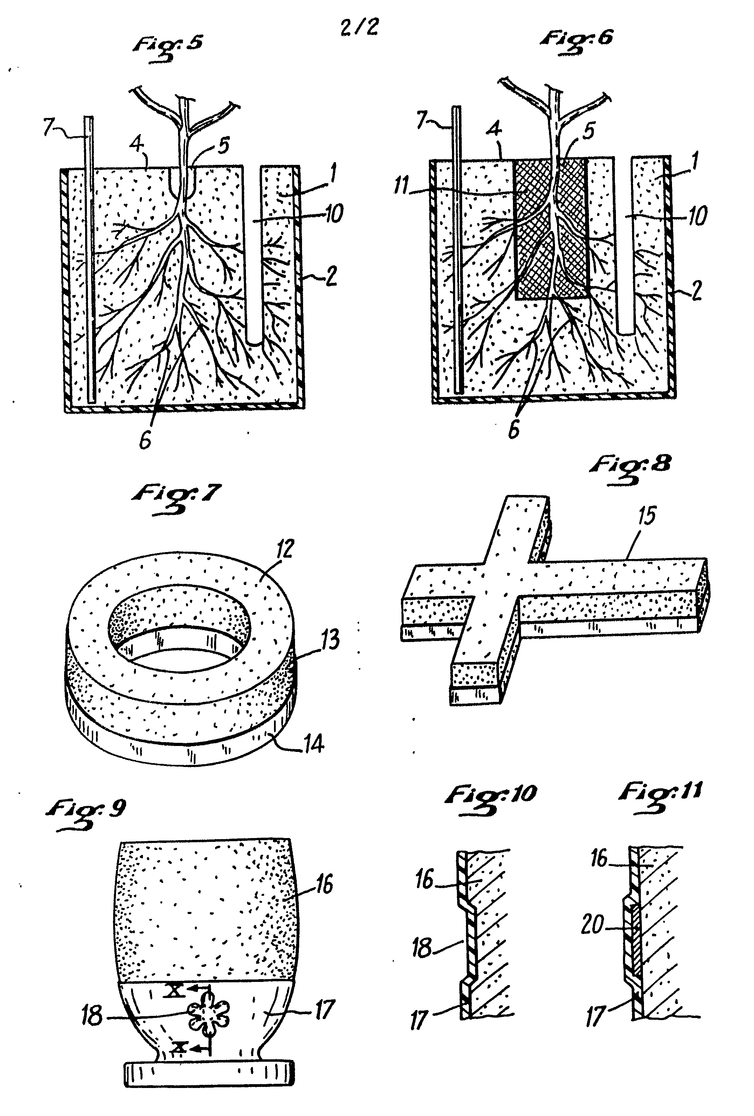

La figure 1 montre un bloc de mousse 1, sensiblement cubique, qui a 20 cm environ de longueur de côté; il a été découpé dans de la mousse hydrophile de polyuré-thane ayant une densité de 0,15 à 0,28.

Ce bloc de mousse 1 a 6 faces qui ont une surface totale S. La face inférieure qui sert de fond sur lequel repose le bloc et les quatre faces latérales sont couvertes d'une couche continue 2 de matière plastique d'une épaisseur de 1 à 3 mm avec une valeur moyenne de 2 mm. Cette couche couvre toute la face inférieure et elle couvre les faces latérales sur une hauteur de 16 cm environ; par conséquent, la couche 2 couvre 70 % de la surface totale S du bloc de mousse 1.

La couche 2 a été réalisée à partir du mélange de deux composants l'un à base de polyisocyanate connu dans le commerce sous la désignation Desmodur VL, l'autre à base de polyol connu dans le commerce sous la dénomination Desmo-phen 1150 de la Société allemande Bayer. La matière obtenue après mélange et durcissement contient 2 2% environ de Desmo-phen 1150, 18,7 % de Desmodur VL, 38 % de sulfate de baryum et divers adjuvants. Dès que le mélange des deux composants a été réalisé, il a été étalé avec une spatule sur la sur-face à couvrir du bloc de mousse 1 et celui-ci a été placé ensuite dans une étuve chauffée à 40 °C. Ce traitement par la chaleur accélère le durcissement.

La figure 4 montre que le mélange étalé sur le bloc de mousse 1 est assez fluide pour pénétrer dans les petits interstices qui existent dans la structure de la mousse et pour former autant de filaments d'ancrage 3. Non seulement la couche imperméable et incorrodable 2 est solide-

6

ment et intimement accrochée à la mousse, mais, en plus,elle assure une étanchéité certaine sur toute la surface qu'elle couvre.

Dans la face supérieure 4 non recouverte du bloc de mousse 2 a été creusé un évidement 5 puis le bloc de mousse 2 a été complètement imbibé d'une solution aqueuse de sels nutritifs comme on en trouve dans le commerce.

Une petite plante a été plantée dans l'évidement 5 qui a été rebouché avec de la poudre de mousse ; après plusieurs mois sans arrosage la plante s'est fortement développée comme le montre la figure 1. Une coupe (figure 2) du bloc de mousse a montré que les racines 6 de la plante se sont infiltrées, avec facilité, dans tout le bloc de mousse 1.

Il a été constaté par l'expérience que le bloc de mousse s'imbibe également en tous points de la solution aqueuse nutritive et que, contrairement à ce qui se passe avec tout autre milieu de culture, la solution reste retenue dans tout le volume et ne se rassemble pratiquement pas, en excès, dans la partie inférieure.

Avec les milieux de culture connus, l'humidité se rassemble au fond et crée un degré excessif d'humidité qui tend à provoquer le pourrissement des racines cependant que, dans la partie supérieure, on observe un dessèchement excessif défavorable.

Avec le bac de l'invention, la solution aqueuse reste dispersée dans le volume à un degré qui convient aux racines 6. Le dessèchement se produit d'une part par l'évaporation dans la partie de la surface totale non recouverte et, d'autre part et principalement par l'absorption et l'évaporation de l'eau par la plante. Ce dessèchement continuel du haut vers le haut est progressif; il laisse dans le volume contenu à l'intérieur de la couche imperméable 2 une humidité convenable où les racines 6 se développent sans risque de pourriture. Ce dessèchement est lent, facile à surveiller au moyen d'un bâtonnet 7 enfoncé dans le bloc de mousse 1. Il suffit d'ajouter de l'eau, de loin en loin.

La figure 3 montre un demi-bloc de mousse 8 résultant d'un bloc 1 fendu en deux moitiés à travers un évidement central important 9. Ce dernier sert à recevoir les racines développées d'une plante déjà importante; après la mise en place de celle-ci, on réunit les deux moitiés et on couvre la surface extérieure d'une couche imperméable et incorrodable comme expliqué ci-dessus; après durcissement cette couche maintient ensemble les deux moitiés du bloc de mousse.

La fraction de la surface extérieure du bloc de mousse 1 qui est couverte de la couche 2 dépend en grande partie de la plante, selon que celle-ci aime plus ou moins un milieu humide. Il n'est pas impossible dans l'esprit de l'invention, de couvrir la totalité des faces latérales et même la quasi totalité de la face supérieure 4, à l'exception d'un trou autour de la plante pour l'arrosage. Avec des plantes qui préfèrent un milieu plutôt sec, il est préférable de couvrir les faces latérales jusqu'à un niveau moins élevé.

Bien entendu, il est possible aussi de semer des graines dans l'évidement 5 (figure 2) d'un bac conforme à l'invention.

Il n'est pas nécessaire que le bloc de mousse 1 soit découpé de manière cubique ni parallélépipédique; il pourrait être sphérique, ce qui faciliterait la réalisation par trempage de la couche imperméable comme expliqué plus haut.

Un bac parallélépipédique de grandes dimensions conforme à l'invention convient à la culture sans terre.

Dans les variantes illustrées par les figures 5 et 6, la couche continue 2 a été réalisée par projection d'une matière imperméable sur les cinq faces d'un cube à l'exception de la face supérieure. En plus du bâtonnet 7 qui sert de témoin d'humidité, un trou vertical 10 a été creusé dans la mousse hydrophile 1, à partir de la face supérieure décou-

verte; ce trou sert à l'adjonction d'engrais au sein du bloc de mousse. Dans le cas de la figure 6, au moment de la plantation l'évidement 5 a été creusé à des dimensions plus importantes que dans l'exemple des figures 2 et 5 pour contenir un certain volume de la terre d'origine 11 de la plante transplantée. Les racines de cette dernière se développent ensuite à travers la mousse comme on l'a dit plus haut.

Les figures 7 à 9 montrent qu'un bac conforme à l'invention est utilisable aussi, avantageusement, pour la réalisation de compositions à base de fleurs coupées et/ou de plantes coupées.

On utilise déjà la mousse de polyuréthane pour la réalisation de compositions à base principalement de fleurs coupées, en remplacement de la mousse naturelle ou de la paille tressée.

Dans le document US-A- 3 003 284 , on décrit l'usage d'une mousse de résine synthétique pour la confection de bouquets de fleurs coupées et on y énumère ses avantages : la rétention de l'eau par la mousse, ce qui maintient plus longtemps la fraîcheur des fleurs, et la facilité de composer le bouquet en enfonçant directement les tiges des fleurs à travers la mousse, au besoin en renforçant les tiges les plus faibles à l'aide d'un fil métallique.

Le document GB-A-1544 630 explique qu'il est préférable d'utiliser la mousse artificielle en l'introduisant partiellement dans un conteneur en matière plastique rigide. Ce conteneur couvre la face inférieure et une fraction de la hauteur des faces latérales de la mousse artificielle. Ainsi la partie inférieure de la mousse est couverte d'une peau plus dure et l'ensemble, étant plus lourd, a plus de stabilité. La mousse est simplement introduite par glissement dans le conteneur qui lui est destiné.

Selon ce document, et ainsi que cela s'est généralisé dans le commerce, le conteneur est fabriqué séparément, par moulage, en matière plastique rigide. Il en résulte

qu'il faut d'abord fabriquer au moins un moule pour l'injection de la matière plastique qui compose chaque conteneur et que, par la suite, on ne peut pas modifier aussi facilement qu'on le souhaiterait la forme de la mousse puisqu'il est nécessaire, à ce moment, de modifier aussi le conteneur et, donc, de fabriquer un nouveau moule.

Il existe plusieurs formes de blocs de mousse, notamment pour les bouquets et couronnes mortuaires (raquette, couronne, coussin, oreiller, coeur, croix, etc..) qui ont toutes nécessité la fabrication de moules pour le moulage séparé du conteneur correspondant.

La mousse est friable; il est facile de la travailler pour lui donner une infinité de formes. L'exploitation de cette propriété de la mousse n'a pas été possible jusqu'à présent à cause de l'impossibilité pratique, pour raison économique, de fabriquer au moins un moule pour la fabrication des conteneurs à chaque modification de la forme de la mousse.

La présente invention apporte une solution avantageuse qui élimine la difficulté expliquée ci-dessus.

Un bac conforme à l'invention, réalisé selon le procédé défini plus haut, est utilisable aussi pour la réalisation de compositions à base de fleurs coupées et/ou de plantes coupées. Il suffit de limiter à la valeur voulue la hauteur sur laquelle les forces latérales du bloc de mousse sont couvertes, en plus de la face inférieure, par la couche de matière imperméable.

La figure 7 et la figure 8 se rapportent respectivement à une couronne et à une croix, de forme classique, mais réalisées conformément à l'invention. La couronne 12 en mousse est couverte sur sa face inférieure et sur une fraction de la hauteur de sa face latérale 13 d'une couche continue 14 réalisée conformément au procédé de l'invention. Il en est de même pour la croix 15 de la figure 8. La couche continue 14 couvre alors 30 % à 40 % de la surface totale du bloc de mousse.

La figure 9 met en évidence l'avantage procuré par l'invention. Un bloc de mousse 16 a été découpé ou taillé pour ressembler à une urne et la partie inférieure de cette dernière a été couverte d'une couche continue 17 de matière imperméable et dure, selon le procédé de l'invention. Cette couche continue 17, qui adhère intimement à la mousse joue le rôle d'un conteneur, mais il ne nécessite pas la fabrication préalable d'un moule. On peut donc modifier, à l'unité, la forme finale donnée au bloc de mousse. On peut aussi, avec une grande facilité réaliser des motifs décoratifs 18, en creux, en désagrégeant la mousse, dans la partie de la face latérale destinée à être couverte par la couche 17. La décoration peut être faite à l'aide d'un outil convenable, manuellement ou de manière automatique. Le motif gravé en creux est recouvert aussi de la couche continue 17 dans laquelle il apparaît aussi en creux comme le montre la figure 10.

La figure 11 se rapporte au cas inverse où le motif 20 est en relief. On peut soit tailler toute la face latérale du bloc de mousse en faisant venir en relief le motif 20 ou plusieurs motifs identiques ou analogues. Mais il est préférable de fabriquer séparément des motifs 20 et de les fixer, par exemple par collage, sur la face latérale du bloc de mousse 16. Après réalisation de la couche continue 17, les motifs 20 apparaissent aussi en relief dans cette couche.

Le procédé de l'invention permet une grande souplesse dans la réalisation, avec de nombreuses formes diverses et avec une grande variété de motifs décoratifs, de manière économique, de blocs de mousse avec conteneur adhérent. On notera que cette possibilité est exploitable aussi dans la fabrication des bacs pour semis et pour plantation, ce qui rend possible la réalisation de pots de fleurs très divers en formes et en motifs décoratifs, sans qu'il soit nécessaire de fabriquer des moules coûteux pour le moulage de pièces en matière plastique rigide.

REVENDICATIONS

1. Bac de semis, de culture de plantes, de compositions à base de fleurs coupées ou de plantes coupées, comprenant un bloc de mousse hydrophile (1) en matière plastique, à pores ouverts, d'une densité comprise entre 0,15 et 0,35, caractérisé en ce qu'une proportion de sa surface extérieure comprise entre 15 % et 95 % et incluant sa face inférieure, est couverte d'une couche continue (2) en matière imperméable insensible à l'action de l'eau et du milieu environnant, cette couche étant compatible avec ladite mousse et adhérant étroitement à la surface de la mousse qu'elle couvre.

2. Bac selon la revendication 1 caractérisé en ce que la matière imperméable est une matière plastique ayant une épaisseur d'une fraction de millimètre à plusieurs millimètres.

3. Bac selon la revendication 2 caractérisé en ce que la matière plastique résulte du mélange intime de deux composants à l'état fluide et durcissant ensuite.

4. Bac selon la revendication 3 caractérisé en ce que l'un des composants est un polyisocyanate et l'autre un polyol.

5. Bac selon la revendication 1 caractérisé en ce que le bloc de mousse (1) est divisé en deux parties (8) au moins par un plan de coupe passant par un évidement (9) contenant les racines d'une plante.

6. Bac selon la revendication 1, caractérisé en ce que la couche continue de matière (2) couvre la face inférieure et les faces latérales du bloc de mousse (1) jusqu'à une hauteur de celles-ci qui correspond à une fraction de surface couverte sensiblement égale à 70 % environ de la surface totale extérieure de ce bloc de mousse (1).

7. Bac selon la revendication 1, caractérisé en ce que la couche continue (2) en matière imperméable est étroitement adhérente à la surface du bloc de mousse (1) au moyen de nombreux petits filaments (3) infiltrés dans la structure de la mousse (1).

8. Bac selon la revendication 1, caractérisé en ce que la couche continue (2) de matière couvre la face intérieure et les faces latérales du bloc de mousse (1) jusqu'à une hauteur de celles-ci qui correspond à une fraction de surface couverte allant de 30 % environ à 40 % environ de la surface totale extérieure de ce bloc de mousse (1).

9. Bac selon l'une quelconque des revendications 1 à 8 caractérisé en ce que la couche continue (2) reproduit des motifs décoratifs pré-existants sur la surface extérieure du bloc de mousse (1).

10. Procédé de fabrication d'un bac selon l'une quelconque des revendications 1 à 9 caractérisé en ce qu'on taille un bloc de mousse (1) dans de la mousse hydrophile de matière plastique, on prépare un mélange fluide de matière durcissant avec le temps, on couvre avec ce mélange à l'état fluide, à une température compatible avec ladite mousse, une fraction de la surface extérieure du bloc de mousse incluant la face inférieure de ce dernier, pour obtenir un accrochage interne dudit mélange à la surface de la mousse et on laisse durcir ce mélange.

11. Procédé selon la revendication 10 caractérisé en ce qu'on réalise sur la partie de la face latérale du bloc de mousse (1) destinée à être couverte par la couche continue (2) au moins un motif décoratif (18, 20) avant application sur ladite partie du mélange fluide durcissant avec le temps.

12. Procédé selon l'une quelconque des revendications 10,11, caractérisé en ce qu'on couvre la partie du bloc de mousse (1) à couvrir par trempage de ce bloc dans un mélange de matière plastique à l'état fluide.

13. Procédé selon l'une quelconque des revendications 10,11 caractérisé en ce qu'on couvre la partie du bloc de mousse (1) à couvrir par projection d'un mélange de matière plastique à l'état fluide.

14. Procédé selon l'une quelconque des revendications 10,11, caractérisé en ce qu'on couvre la partie du bloc de mousse (1) à couvrir par badigeonnage d'un mélange de matière plastique à l'état fluide.

0241341

1/2

**Fig: 1**

**Fig: 2**

**Fig: 3**

**Fig: 4**

*Fig.5*

*Fig.6*

*Fig.7*

*Fig.8*

*Fig.9*

*Fig.10*

*Fig.11*

## RAPPORT DE RECHERCHE EUROPEENNE

Office européen
des brevets

EP 87 40 0630

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | GB-A-2 131 687 (TRIDENT FOAMS LTD) <br> * En entier * | 1-3,6-8,10 | A 01 G 5/04 <br> A 01 G 9/10 <br> A 01 G 31/00 |
| X | DE-A-2 636 395 (GRAVI-MECHANICS) <br> * Revendications 1-3,7,10,12,13,19,21,28,34; figures 1-4,7-22 * | 1,2 | |
| Y | | 6,7,10,12 | |
| Y | US-A-1 775 838 (WEDGE) <br> * Figures 1,2; revendications 1-11 * | 6,7,10,12 | |
| Y | US-A-4 064 301 (HOWARD) <br> * En entier * | 1-3,6,9-14,5 | DOMAINES TECHNIQUES RECHERCHES (Int Cl 4) <br><br> A 01 G <br> A 47 G |
| Y | DE-A-3 525 000 (HAPPY BONSAI) <br> * Revendications 1,3,4,9,10; figure 3; page 16, ligne 34 - page 17, ligne 14 * | 1-3,6,9-14,5 | |

-/-

Le présent rapport de recherche a été établi pour toutes les revendications

| Lieu de la recherche <br> LA HAYE | Date d'achèvement de la recherche <br> 26-06-1987 | Examinateur <br> MEINDERS H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| | Office européen des brevets | **RAPPORT DE RECHERCHE EUROPEENNE** | Numero de la demande |
|---|---|---|---|
| | | | EP 87 40 0630 |

| **DOCUMENTS CONSIDERES COMME PERTINENTS** | | | Page 2 |
|---|---|---|---|

| Catégorie | Citation du document avec indication, en cas de besoin, des parties pertinentes | Revendication concernée | CLASSEMENT DE LA DEMANDE (Int Cl 4) |
|---|---|---|---|
| Y | WO-A-8 203 530 (FAR WEST BOTANICALS) <br> * Revendications 1,2,13-19; page 5, ligne 32 - page 6, ligne 16 * | 5 | |
| A | | 1 | |
| | --- | | |
| A | US-A-3 899 850 (GLÜCK et al.) <br> * Colonne 6, lignes 22-63; figures 1,4,7; revendications 1,2,5,6,17 * | 1,2 | |
| | --- | | |
| A | DE-B-2 513 686 (HARTMEYER) <br> * Revendications 1,2; exemple 1 * | 3,4 | |
| | --- | | |
| A,D | DE-A-1 949 473 (BAYER) <br><br> * Revendications 1-3,5; figures 1-8; page 6, ligne 18 - page 7, ligne 20 * | 1,2,8 12-14 | **DOMAINES TECHNIQUES RECHERCHES (Int Cl 4)** |
| | --- | | |
| A | WO-A-8 503 192 (LINDESTRÖM) <br> * Revendications 1,3-6; figure 2 * | 1,2 | |
| | ----- | | |

Le présent rapport de recherche a été établi pour toutes les revendications

| Lieu de la recherche | Date d'achèvement de la recherche | Examinateur |
|---|---|---|
| LA HAYE | 26-06-1987 | MEINDERS H. |